# EUROPEAN PATENT APPLICATION

(11) **EP 3 035 589 A1**
(43) Date of publication of application: **22.06.2016**
(21) Application number: 14307095.1
(22) Date of filing: 19.12.2014
(51) Int. Cl.: H04L 9/32, G06F 21/30, H04L 29/06, G06F 21/44, G06F 21/34

(54) **Security management system for authenticating a token by a service provider server**

(71) Applicant: GEMALTO SA, 92190 Meudon (FR)
(72) Inventor: Gouget, Aline, 92190 Meudon (FR); Debois, Georges, 92190 Meudon (FR); Webster, Michael, 92190 Meudon (FR)
(74) Representative: Lotaut, Yacine Diaw

(57) **Abstract**

The present invention relates to a security management system (SYS) for authenticating a token (D) by a service provider server (SP_SERV), wherein said system (SYS) comprises:
- said token (D) comprising a secret key (SKid) and which is adapted to:
- compute a derived secret key (SKps), said computation being a derivation of said secret key (SKid) based on a public key (PKsector) provided by said service provider server (SP_SERV)
- generate at least one pseudonym (Ps) based on said derived secret key (SKps) ;

- said service provider server (SP_SERV) comprising a public key (PKsector) which is adapted to authenticate said token (D) based on said pseudonym (Ps).

## Description

### TECHNICAL FIELD

The present invention relates to a security management system for authenticating a token by a service provider server. The invention also relates to an associated authentication method.

Such a security management system may be used in a non-limitative example in any system which needs protection of the privacy of a token's user.

### BACKGROUND OF THE INVENTION

A first security management system for authenticating a token by a service provider server, which is well-known by the man skilled in the art, permits to perform a deniable authentication. Said deniable authentication and is performed via a chip authentication procedure version 2 referred as CA2 together with a restricted identification procedure referred as RI. These procedures are well-known by the man skilled in the art.

The CA2 procedure permits the service provider to authenticate the token. The RI procedure comprises:
- the sending by the service provider server of a sector public key to the token, said sector public key being associated to a domain of the service provider server;
- the computation by the token of a pseudonym based on said sector public key and on a secret key of the token;
- the sending of said pseudonym to said service provider server.

One problem of this prior art is that the service provider server may not be able to verify the pseudonym. Therefore, it may not verify if the pseudonym is a pseudonym associated to a token belonging to the domain of said service provider server.

Hence, any third party may use a pseudonym based on the sector public key and send it to the service provider server with a forged token and therefore may fraudulently communicate with said service provider server. The service provider server is not able to verify that it is the genuine token which has sent said pseudonym.

A second security management system for authenticating a token by a service provider server, which is well-known by the man skilled in the art, permits to perform an authentication with transferable proof. Said authentication is performed via a chip authentication procedure version 3 referred as CA3.

The CA3 procedure comprises:
- the sending by the service provider server of a sector public key to the token, said sector public key being associated to a domain of the service provider server;
- the computation by the token of a pair of pseudonyms based on:
- a pair of secret keys of the token, said pair of secret keys being associated to a group public key. Said group public key is known by the service provider server;
- the sector public key.
- the sending by the token of a signature of a message based on the pair of secret keys and of the sector public key, said signature being a transferable proof.

Moreover, in a non-limitative embodiment, the CA3 procedure further comprises the transmission by the token to the service provider server of at least one of the pseudonym with the transferable proof. This at least one pseudonym acts as a public key which permits the service provider server to verify the transferable proof. Hence, in this case, the service provider server acknowledges that the token associated to said pair of pseudonyms has been authenticated.

One problem of this prior art is that the group secret keys used to generate the token secret keys may be fraudulently recovered by a third party who:
- has the capability to have access to the secret keys of two tokens; or
- has the capability to have access to the group secret keys, e.g. during the transfer of data and keys to the several entities that are in charge of the personalization of the tokens.

Once the group secret keys known, all the system is no more reliable. The third party may be able to generate fraudulently couple of token secret key and then fraudulent pseudonyms belonging to the system.

### SUMMARY OF THE INVENTION

It is an object of the invention to provide a security management system for authenticating a token which may perform a deniable authentication, or an authentication with transferable proof, with a greater protection of the secret key of the token, and which permits a service provider server to have a proof that at least a same pseudonym which it receives belongs to the same token.

To this end, there is provided a security management system for authenticating a token by a service provider server, wherein said system comprises:
- said token comprising a secret key and which is adapted to:
   - compute a derived secret key, said computation being a derivation of said secret key based on a public key provided by said service provider server;
   - generate at least one pseudonym based on said derived secret key;
- said service provider server comprising a public key which is adapted to authenticate said token based on said pseudonym.

According to non-limitative embodiments of the invention, the security management system in accordance with the invention further comprises the following characteristics.

In a non-limitative embodiment, said service provider server is further adapted to transmit to said token a certificate comprising said public key.

In a non-limitative embodiment, said service provider server is further adapted to transmit to said token an information indicating if the authentication to be performed by the service provider server comprises a transferable proof or not.

In a non-limitative embodiment, the authentication of said token by said service provider is a deniable authentication, and for said deniable authentication of said token,
- said service provider server is adapted to:
   - generate a challenge;
   - cipher said challenge with said at least one pseudonym and transmit it to said to said token;
   - check said challenge against the challenge received from said token;
- said token is adapted to:
   - receive said ciphered challenge;
   - decipher said ciphered challenge using said derived secret key;
   - transmit back the deciphered challenge to said service provider server.

In another non-limitative embodiment, the authentication of said token by said service provider is an authentication with a transferable proof, and for said authentication of said token,
- said service provider server is adapted to:
   - generate a challenge and to transmit it to said token;
   - verify a signature received from said token, said verification using said pseudonym and said challenge;
- said token is adapted to:
   - receive said challenge;
   - compute said signature of said challenge using said derived secret key and transmit it to said service provider server.

In a non-limitative embodiment, said signature is further computed based on at least one attribute stored in said token.

In a non-limitative embodiment, said token is adapted to compute said signature of said challenge based on said derived secret key and on further data.

In a non-limitative embodiment, said service provider server is adapted to authenticate a token comprising a secret key, said authentication being based on a pseudonym generated by said token based on a derived secret key, said derived secret key being a derivation of said secret key based on said public key.

In addition, there is provided a token comprising a secret key, wherein said token is adapted to:
- compute a derived secret key, said computation being a derivation of said secret key based on a public key provided by said service provider server;
- generate at least one pseudonym based on said derived secret key;
- be authenticated by said service provider server (SP_SERV) comprising said public key (PKsector), said authentication being based on said at least one pseudonym (Ps).

In a non-limitative embodiment, said token is a secure element.

In addition, there is provided an authentication method for authenticating a token by a service provider server, wherein said token comprises a secret key and said service provider server comprises a public key, and wherein said authentication method comprises:
- computing by means of said token a derived secret key, said computation being a derivation of said secret key based on a public key provided by said service provider server;
- generating by means of said token at least one pseudonym based on said derived secret key;
- authenticating by means of said service provider server said token based on said pseudonym.

According to non-limitative embodiments, the authentication method in accordance further comprises the following characteristics.

In a non-limitative embodiment, said authentication method further comprises transmitting by means of said service provider server to said token of a certificate comprising said public key.

In a non-limitative embodiment, said authentication method further comprises transmitting by means of said service provider server to said token an information indicating if the authentication to be performed by the a service provider server comprises a transferable proof or not.

In a non-limitative embodiment, said authentication method is a deniable authentication, and it further comprises:
- generating a challenge by means of said a service provider server;
- ciphering by means of said a service provider server said challenge with said at least one pseudonym and transmitting it to said to said token by means of said a service provider server;
- receiving said ciphered challenge by means of said token;
- deciphering by means of said token said ciphered challenge using said derived secret key;
- transmitting back the deciphered said challenge to said service provider server by means of said token;
- checking by means of said a service provider server said challenge against the challenge received from said token.

In a non-limitative embodiment, said authentication method is with a transferable proof, and it further comprises:
- generating by means of said a service provider server a challenge and to transmit it to said token by means of said a service provider server;
- receiving said challenge by means of said token;
- computing by means of said token said signature of said challenge based on said derived secret key and transmit it to said service provider server by means of said token;
- verifying by means of said a service provider server said signature received from said token, said verification using said pseudonym and said challenge.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1 illustrates schematically a security management system according to a non-limitative embodiment of the invention;
- Fig. 2 illustrates schematically a non-limitative embodiment of a token of the security management system of Fig. 1;
- Fig. 3 illustrates schematically a non-limitative embodiment of a service provider server of the security management system of Fig. 1;
- Fig. 4 is a schematic organization chart of an authentication method carried out by the security management system of Fig. 1;
- Fig. 5 is a schematic diagram of the authentication method of Fig. 4 according to a first non-limitative embodiment;
- Fig. 6 is a schematic diagram of the authentication method of Fig. 4 according to a second non-limitative embodiment;
- Fig. 7 illustrates schematically a secure messaging canal set-up between the token and the service provider server of the system of Fig. 1 to 3.

### DESCRIPTION OF EMBODIMENTS OF THE INVENTION

In the following description, well-known functions or constructions by the man skilled in the art are not described in detail since they would obscure the invention in unnecessary detail.

The present invention relates to a security management system SYS.

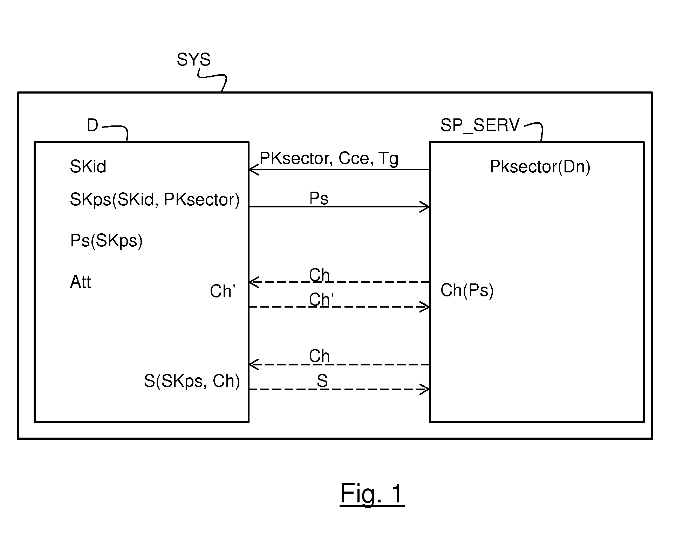

Said security management system SYS is illustrated in Fig. 1 in a non-limitative embodiment.

Said security management system SYS comprises:
- A token D comprising a secret key SKid; and
- A service provider server SP_SERV comprising a public key PKsector. Said public key sector is associated with the domain Dn of the service provider server SP_SERV.

The different elements of the security management system SYS are described in more detail in the following.

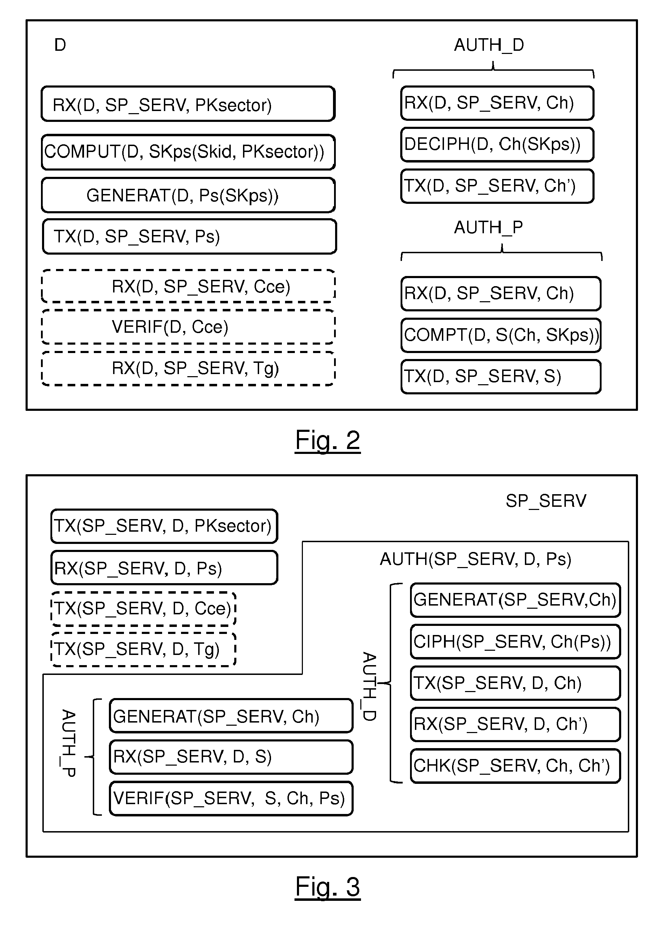

The token is described with reference to Fig. 1 and 2, and the service provider server SP_SERV with reference to Fig. 1 and 3.

In a non-limitative embodiment, a token D is a secure element.

A secure element is a secured component which may perform cryptographic functionalities and is adapted to store a secret key.

It is to be noted that the secret key SKid is permanently stored in the token D.

In a non-limitative variant, the token D is a smart card. In non-limitative examples, the smart card is an Electronic Identity Card, is a health card, a driving license, a passport, a privacy card, a financial service card, an access card etc. It may be contact or contactless.

In other non-limitative variants, the token D is an eSE (embedded secure element), a micro-SD, a TEE (Trusted Execution Environment), a TPM (trusted Platform Module) etc. It is to be noted that a TEE and a TPM may be hardware, software or a combination of hardware and software.

Said token D comprises a plurality of attributes Att.

In non-limitative examples, said attributes Att are:
- the age of the end-user of the token D;
- the sex of the end-user of the token D;
- a geographical zone where the end-user of the token D lives (country, city etc.).

Said token D is adapted to:
- compute a derived secret key SKps, said computation being a derivation of said secret key SKid based on said public key PKsector provided by said service provider server SP_SERV (function illustrated in Fig. 2 COMPUT(D, SKps(SKid, PKsector)));
- generate at least one pseudonym Ps based on said derived secret key SKps (function illustrated in Fig. 2 GENERAT(D, Ps(SKps)).

Hence, the derived key SKps is dynamically computed.

It is to be noted that in a non-limitative embodiment, the derived secret key SKps is temporarily stored in the token D, in particular during the time of the communication with the service provider server SP_SERV to which it is directed. In another non-limitative embodiment, the token comprises a mapping table with at least one pair of derived key SKps-service provider server SP_SERV.

The token D is further adapted to transmit the pseudonym Ps to said service provider server SP_SERV (function illustrated in Fig. 2 TX(D, SP_SERV, Ps)), and said service provider server SP_SERV is adapted to receive said pseudonym Ps from said token D (function illustrated in Fig. 3 RX(SP_SERV, D, Ps)).

The pseudonym Ps generated is a domain-specific pseudonym. Indeed, the pseudonym Ps depends on the secret key SKid that is managed by the token D and on public information related to the party that will subsequently authenticate the pseudonym, here on the public key PKsector of the service provider server SP_SERV.

The pseudonym Ps is therefore specific per pair (token, service provider server). It prevents the linkability of the same token D across several service provider servers of the domain Dn of the service provider server SP_SERV. It means that the user's activities of the token D with different parties, such as service providers, may not be linked together.

In a non-limitative embodiment, the derivation of said secret key SKid comprises a hash of said secret key SKid and of said public key PKsector.

In a non-limitative variant of said embodiment, the derivation further comprises a conversion of the format of said secret key SKid to a format relevant for a chip authentication procedure CA2.

In a non-limitative embodiment, the pseudonym Ps is equal to g^{SKps}, with g a cryptographic generator. Said cryptographic generator is a public parameter of the domain Dn, which is known by all the tokens of the domain Dn.

In another non-limitative embodiment, the pseudonym Ps is equal to SKps*g.

It is to be noted that said service provider server SP_SERV is adapted to send said public key PKsector to said token D (function illustrated in Fig. 3 TX(SP_SERV, D, PKsector), and said token D is adapted to receive said public key PKsector from said service provider server SP_SERV (function illustrated in Fig. 2 RX(D, SP_SERV, PKsector)).

In a non-limitative embodiment, said service provider server SP_SERV is further adapted to transmit to said token D a certificate Cce comprising said public key PKsector (function illustrated in Fig. 3 TX(SP_SERV, D, Cce)). Said certificate Cce is transmitted with said public key PKsector.

Said token D is further adapted to:
- receive said certificate Cce from said service provider server SP_SERV (function illustrated in dotted lines in Fig. 2 RX(D, SP_SERV, Cce)); and
- verify said certificate Cce, using its own secret key SKid (function illustrated in dotes lines Fig. 2 VERIF(D, Cce)).

This permits the token D to verify that the public key it receives from said service provider server SP_SERV is authentic.

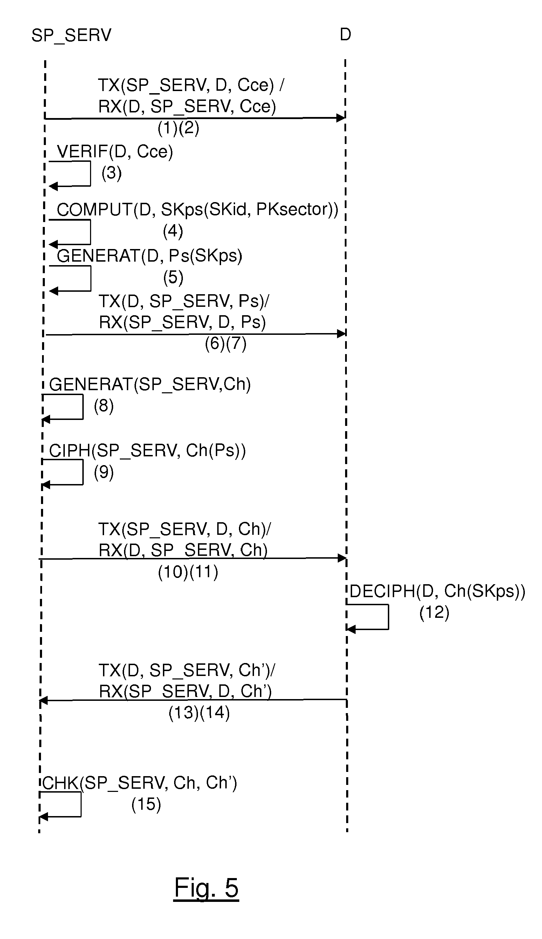

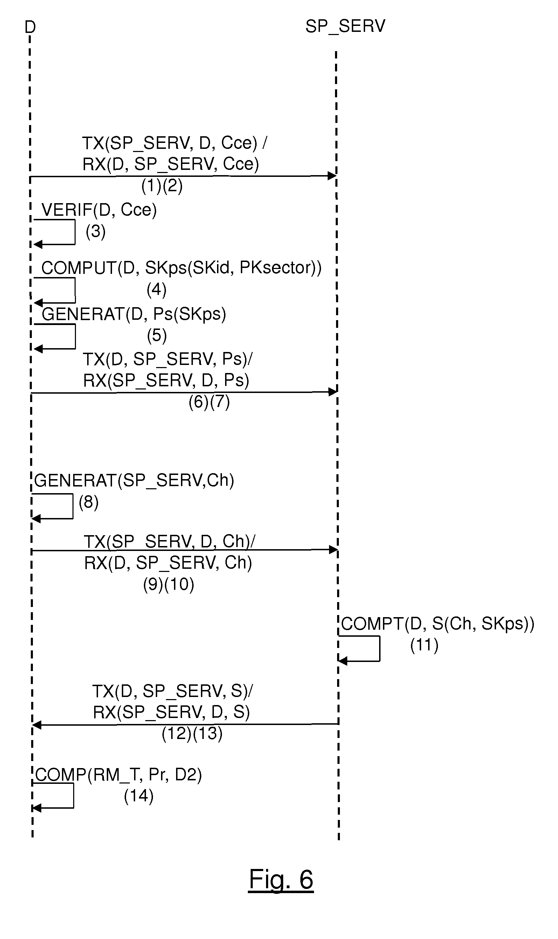

The derivation of the secret key SKid and the generation of the pseudonym Ps are illustrated in Fig. 5 and Fig. 6. In the non-limitative embodiment illustrated, a certificate Cce is used.

Hence, **in step 1),** the service provider server SP_SERV transmits to said token D a certificate Cce comprising said public key PKsector.

**In step 2),** said token D receive said certificate Cce from said service provider server SP_SERV and verify said certificate Cce, using its own secret key Skid **in step 3).**

**In step 4),** said token D computes a derived secret key SKps, said computation being a derivation of said secret key SKid based on said public key PKsector provided by said service provider server SP_SERV.

**In step 5),** said token D generates at least one pseudonym Ps based on said derived secret key SKps

**In step 6),** said token D transmits the pseudonym Ps to said service provider server SP_SERV which receives it **in step 7).**

Then, with the pseudonym Ps of the token D, the service provider server SP_SERV is further adapted to authenticate said token D based on said pseudonym Ps (function illustrated in Fig. 3 AUTH(SP_SERV, D, Ps)).

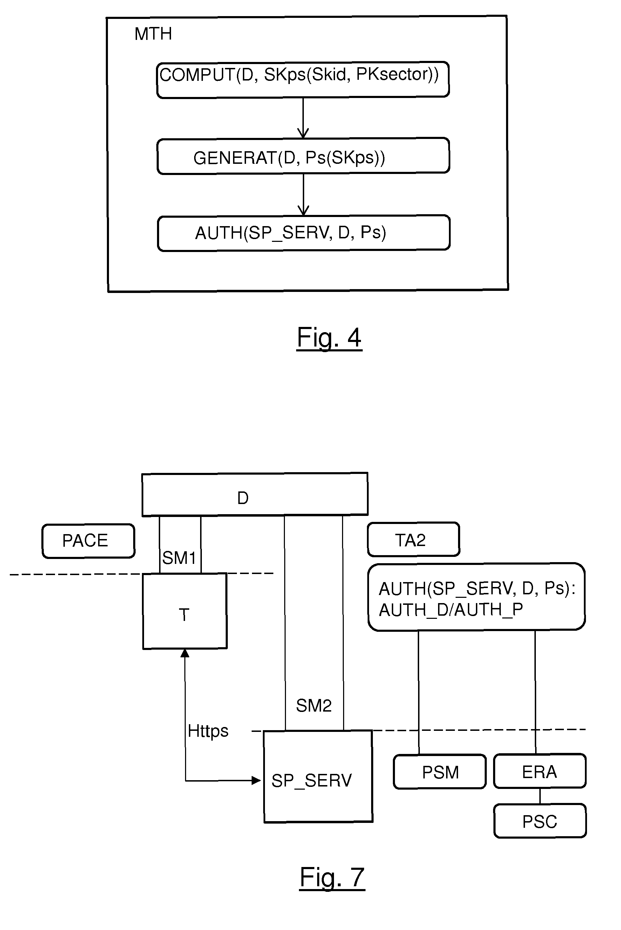

Hence, the service management system SYS is adapted to carry out an authentication method MTH as illustrated in Fig. 4.

Said authentication method MTH for authenticating a token D by a service provider server SP_SERV, wherein said token D comprises a secret key SKid and said service provider server SP_SERV comprises a public key PKsector, comprises:
- computing by means of said token D a derived secret key SKps, said computation being a derivation of said secret key SKid based on a public key PKsector provided by said service provider server SP_SERV (step illustrated in Fig. 4 COMPUT(D, SKps(Skid, PKsector));
- generating by means of said token D at least one pseudonym Ps based on said derived secret key SKps (step illustrated in Fig. 4 GENERAT(D, Ps(SKps)));
- authenticating by means of said service provider server SP_SERV said token D based on said pseudonym Ps ((step illustrated in Fig. 4 AUTH(SP_SERV, D, Ps).

As will be described hereinafter, the service provider server SP_SERV is adapted to perform two different authentications of the token D via its pseudonym Ps:
- a deniable authentication AUTH_D; or
- an authentication with a transferable proof AUTH_F.

With both authentications, the service provider server SP_SERV is adapted to prove to an external party that an authentication has been performed.

As will be described hereinafter, with the deniable authentication AUTH_D and with the authentication with a transferable proof AUTH_P, the service provider server SP_SERV is adapted to request the authentication of an "anonymous token". The token D computes a specific pseudonym, by using its secret key and the public key of the service provider server SP_SERV. Then, the token D transmits that pseudonym Ps to the service provider. When the authentication succeeds, the service provider server SP_SERV is convinced that the token D knows the correct secret key corresponding to that pseudonym Ps and that the token D is indeed related to that pseudonym Ps. For example, if the service provider server SP_SERV already knows that pseudonym Ps, then it can be deduced that it is the same token D which was previously used when the service provider server SP_SERV has authenticated that pseudonym Ps. Moreover, with the authentication with a transferable proof AUTH_P, the service provider server SP_SERV is adapted to prove to an external party that an authentication has been performed.

Moreover, with the authentication with a transferable proof, there is a cryptographic proof that the token D knows the secret key used to generate that pseudonym Ps for that specific domain Dn. Hence, the service provider server SP_SERV is adapted to verify that the token D belongs to its own domain Dn. The service provider server SP_SERV is further adapted to prove to an external party that it has followed some established rules for risk management and detection of abnormal behavior.

For example: some parameters and thresholds could be used to define "consumer profiles" based on pseudonyms; some specific activities could be identified as having a "high" risk score whereas others activities could be rated low or medium. All this information could be combined by the service provider server SP_SERV to make the decision of whether to request replenishment of a revocation status of a specific pseudonym.

In order for the token D to be aware of the type of authentication (deniable or with a transferable proof) the service provider server SP_SERV will perform, in a first non-limitative embodiment, said service provider server SP_SERV is further adapted to transmit an information Tg indicating if the authentication to be performed by the service provider server SP_SERV comprises a transferable proof S or not (function illustrated in dotted lines Fig. 3 TX(SP_SERV, D, Tg))). In this case, said token D is adapted to receive said information Tg (function illustrated in dotted lines in Fig. 2 RX(D, SP_SERV, Tg))).

Therefore, said information Tg is adapted to inform the token D if the authentication is deniable AUTH_D or with a transferable proof AUTH_P.

In a non-limitative embodiment, said information Tg is further adapted to inform the token D if one or two pseudonyms Ps are to be computed and sent.

Said information may be used in the computation of the derived secret key SKps.

Therefore, in a non-limitative embodiment, the computation of said derived secret key SKps is a derivation of said secret key SKid based on a public key PKsector provided by the service provider server SP_SERV and on said information Tg.

When the information Tg is used, in a first non-limitative embodiment, the token D will generate one pseudonym Ps.

When the information Tg is used, in a second non-limitative embodiment, the token D will generate two different pseudonyms Ps1, Ps2.

In a second non-limitative embodiment, the token D will be aware of the type of authentication (deniable or with a transferable proof) the service provider server SP_SERV will perform, with the type of command sent by said service provider server SP_SERV.

For example, if the service provider server SP_SERV asks for the entry of a personal identification code PIN, the token D is aware that a transferable proof S is needed. If the service provider server SP_SERV asks the token D to authenticate itself, the token D is aware that a deniable authentication is enough.

In the following, the functions performed by the token D and the service provider server SP_SERV for the different authentications AUTH_D and AUTH_P.

### • Deniable authentication AUTH D

As illustrated in Fig. 3, for the deniable authentication AUTH_D, the service provider server SP_SERV is adapted to transmit a service public key PKsector and receive a pseudonym Ps generated by said token D as described above, and the service provider server SP_SERV is further adapted to:
- generate a challenge Ch (function illustrated GENERAT(SP_SERV, Ch));
- cipher said challenge Ch with said at least one pseudonym Ps (function illustrated in Fig. 3 CIPHR(SP_SERV, Ch(Ps)) and transmit it to said to said token D (function illustrated in Fig. 3 TX(SP_SERV, D, Ch));
- receive the challenge Ch' deciphered by said token D (function illustrated in Fig. 3 RX(SP_SERV, D, Ch')); and
- check said challenge Ch against the challenge Ch' received from said token D (function illustrated in Fig. 3 CHK(SP_SERV, Ch, Ch'))).

For the deniable authentication AUTH_D, the token D is adapted to compute the derived secret key SKps, generate a pseudonym Ps based on said derived secret key SKps associated to said service provider server SP_SERV, and transmit said pseudonym Ps to the service provider server SP_SERV as described above.

Said token D is further adapted to:
- receive said ciphered challenge Ch (function illustrated in Fig. 2 RX(D, SP_SERV, Ch));
- decipher said ciphered challenge Ch using said derived secret key SKps (function illustrated in Fig. 2 DECPHR(D, Ch(SKps))); and
- transmit back the deciphered challenge Ch' to said service provider server SP_SERV (function illustrated in Fig. 2 TX(D, SP_SERV, Ch')).

The deniable authentication AUTH_D is described hereinafter with reference to Fig. 5.

After the computation of the derived secret key SKps and the generation of the pseudonym Ps as described above, the deniable authentication AUTH_D further comprises the following steps.

**In step 8),** the service provider server SP_SERV generates a challenge Ch, and ciphers said challenge Ch with said pseudonym Ps received from the token D, **in step 9).**

The pseudonym PS is used as a public key for said ciphering.

In a non-limitative embodiment, the ECIES ("Elliptic Curve Integrated Scheme") algorithm is used.

In a non-limitative embodiment, the generation of said challenge Ch may be performed before the reception of the pseudonym Ps sent by the token D.

Then, **in step 10),** it transmits said ciphered challenge Ch to said token D which receives it **in step 11).**

**In step 12),** said token D deciphered said ciphered challenge Ch with said derived secret key SKps. Said derived secret key SKps is used as the secret key for the deciphering.

**In step 13),** the token D transmits the challenge Ch' deciphered to the service provider server SP_SERV which receives it **in step 14)** and compares it with the challenge it has generated Ch **in step 15).**

If both challenges Ch and Ch' are equal, the service provider server SP_SERV deduces that said token D has used the right secret key SKps which is associated with its public key PKsector. Therefore, it may trust this token D.

The challenge Ch' sent by the token D to the service provider server SP_SERV is a cryptographic convincing proof which permits said service provider server to authenticate said token D.

Indeed, without the knowledge of the secret keys SKid, and SKps of the token D, the service provider server SP_SERV deduces that the token D is the owner of the pseudonym PS it has received, and, that it is always the same token D which presents itself with the same pseudonym Ps.

The token D is then authenticated by the service provider server SP_SERV. The service provider server SP_SERV may prove to an external authority that is has authenticated said token D identified by said pseudonym Ps. Thanks to this authentication procedure, the end-user's identification is kept private from the external authority as the service provider server SP_SERV has only access to the pseudonyms Ps. When such a deniable authentication is performed and if after said deniable authentication, there is no other cryptographic process performed with a transferable proof sent by the service provider server SP_SERV, the service provider server SP_SERV is not able to:
- proof to an external authority that a specific end-user has been authenticated; and
- give to said external authority information on said end-user's activities.

The deniable authentication provides a high protection of end-user privacy.

Moreover, it permits to have the non-linkability property. As a pseudonym Ps is associated to a public key Pksector of a specific domain Dn, and therefore of a specific service provider SP_SERV, said service provider server SP_SERV may not be able to exchange data regarding an authenticated token D associated to said pseudonym Ps with another service provider server which belongs to the same domain Dn, as this other service provider server won't be able to know if it the same token D or another one if it receives the same pseudonym Ps.

It is to be noted that without said derivation of the secret key SKid and without said computation of the pseudonym Ps with the derived secret key SKps, when a standard restricted procedure RI is used, any third party may send a challenge computed with the public key PKsector (which is accessible by anybody) and then communicate with the service provider server SP_SERV without the possibility for the service provider server SP_SERV to verify said challenge, and therefore without the possibility to authenticate said third party.

The third party may use a forgeable token D without the service provider server's knowledge.

Therefore with a standard restricted procedure RI, the service provider server SP_SERV has to use some white or black lists which comprise the tokens D which are respectively not revoked from the domain Dn and revoked from the domain Dn.

Moreover, when a standard restricted procedure RI is used, the service provider server SP_SERV may also generate a challenge itself with the public key PKsector and send it to an external authority which asks for a proof of authentication, without having any interaction with the token D. Therefore, said challenge may not be used as a cryptographic proof.

With this deniable authentication, the service provider server SP_SERV may not deduce that the token D belongs to the domain Dn, and may not know if said token D has been revoked from the domain Dn.

To do so, the service provider server SP_SERV authenticates the token D with a transferable proof as described hereinafter.

### • Authentication with a transferable proof AUTH P

As illustrated in Fig. 3, for the authentication with a transferable proof AUTH_P, the service provider server SP_SERV is adapted to transmit a service public key PKsector and receive a pseudonym Ps generated by said token D as described above, and the service provider server SP_SERV is further adapted to:
- generate a challenge Ch (function illustrated in Fig. 3 GENERAT(SP_SERV, Ch) and to transmit it to said token D (function illustrated in Fig. 3 TX(SP_SERV, D, Ch));
- receive a signature S from said token D (function illustrated in Fig. 3 RX(SP_SERV, D, S));
- verify a signature S received from said token D, said verification using said pseudonym Ps and said challenge Ch (function illustrated in Fig. 3 VERIF(SP_SERV, S, Ch, Ps)).

For the authentication with a transferable proof AUTH_P, the token D is adapted to compute the derived secret key SKps, generate a pseudonym Ps based on said derived secret key SKps associated to said service provider server SP_SERV, and transmit said pseudonym Ps to the service provider server SP_SERV as described above.

Said token D is adapted to:
- receive said challenge Ch (function illustrated RX(D, SP_SERV, Ch));
- compute said signature S of said challenge Ch using said derived secret key SKps (function illustrated COMPT(D, S(Ch,SKps))) ;and
- transmit said signature S to said service provider server SP_SERV (function illustrated TX(D, SP_SERV, S)).

The authentication with a transferable proof AUTH_P is described hereinafter with reference to Fig. 6.

After the computation of the derived secret key SKps and the generation of the pseudonym Ps as described above, the authentication with transferable proof AUTH_P further comprises the following steps.

**In step 8),** the service provider server SP_SERV generates a challenge Ch, and transmits it to said token D **in step 9).**

In a non-limitative embodiment, the service provider server SP_SERV may transmit further data Dat. In non-limitative examples, said data Dat comprise:
- the date (time, day, month, year);
- a service provider server's identifier. When such an identifier is transmitted, it permits the token D to send back a signature S based on said identifier. The service provider server SP_SERV may verify that it is the right token D.

**In step 10),** said token D receives said challenge Ch, and if the case may be the data Dat, and **in step 11)** compute a transferable proof which is a signature S of said challenge Ch (and further data Dat) using said derived secret key SKps.

The derived secret key SKps is used as a signature secret key.

In a non-limitative embodiment, the ECDSA algorithm ("Elliptic Curve Digital Signature") is used for the computation of the signature S.

The computation of a signature S being well-known by the man skilled in the art, it won't be described hereinafter.

Said challenge Ch permits to have a different signature S each time one is needed. Otherwise, if the same signature S is used, it may be duplicated, and there won't be any more cryptographic proof.

In a non-limitative embodiment, the signature S is computed based on at least one attribute Att stored in said token D. In this case, it is the service provider server SP_SERV which requests this or these particular attributes (step not illustrated).

It will be used by the service provider server SP_SERV according to the criteria an external authority wants to verify with said service provider server SP_SERV. In a non-limitative example, if the domain Dn of the service provider server SP_SERV is an alcohol internet sale service, the external authority may ask for the age of the end-users who used said sale service to buy alcohols.

**In step 12),** the token D transmits the signature S to the service provider server SP_SERV.

**In step 13),** the service provider server SP_SERV receives the signature S.

**In step 14),** the service provider server SP_SERV verifies said signature S using the pseudonym Ps previously received from the token D and the challenge Ch.

Hence, the pseudonym Ps acts as a verification public key to verify the signature S, which is associated to the derived secret key SKps which is only known by the token D.

If the signature S is correct, the service provider server SP_SERV deduces that said token D has used the right secret key SKps which is associated with the public key Ps used to generate the signature S. Therefore, it may trust this token D.

Moreover, the service provider server SP_SERV may provide to an external party:
- the challenge Ch;
- the signature S of said challenge Ch it has received from the token D;
- the pseudonym Ps of the token D which has been used to compute said signature S.

It proves to the external party that:
- said service provider server SP_SERV that is has authenticated said token D identified by said pseudonym Ps (which is associated to said public key PKsector of the domain Dn);
- said token D belongs to the domain Dn of the service provider server SP_SERV.

For this purpose, the service provider server SP_SERV may use the attributes Att and the data Dat which have been used for the computation of the signature S.

The service provider server SP_SERV may give some information on the activities of the end-user of a token D corresponding to a particular pseudonym Ps. In a non-limitative example, it may give the number of transactions performed with the same pseudonym Ps.

Thanks to this authentication procedure, the end-user's identification is kept private from the service provider server SP_SERV and therefore from the external authority.

The authentication with a transferable proof S is more secure than the chip authentication procedure CA3 described in the prior art. Indeed, it is not possible for a third party to recover the group secret keys (corresponding to the sector public key) and therefore to make a fake token D.

It is to be noted that this authentication with a transferable proof S doesn't need complex computations and neither a lot of memory space for the computation.

Hence, thanks to the computation of the derived secret key SKps which is an intermediate secret key, and to the generation of the pseudonym Ps based on said intermediate secret key SKps, it permits to have a subsequently cryptographic scheme (with the following authentication operations deniable or with a transferable proof) which is more secure, as the service provider server SP_SERV is able to authenticate the pseudonym Ps of a token D.

In order also for the token D to authenticate the service provider server SP_SERV, in a non-limitative embodiment, the TA2 procedure may be performed before the authentication of the token D and therefore before the generation of the pseudonym Ps. Hence, the token D is sure that the service provider server which transmits the public key PKsector is reliable.

Hence, the TA2 procedure together with the generation of the pseudonym Ps, and with the authentication deniable AUHT_D or with a transferable proof AUTH_P, permit to:
- perform a mutual authentication between the token D and the service provider server SP_SERV;
- set-up a secure messaging canal SM2 between the token D and the service provider server SP_SERV.

Hence, the token D and the service provider server SP_SERV may now exchange some data via said secure messaging communication canal SM2 as illustrated in Fig. 7.

In non-limitative embodiments as illustrated in Fig. 7, the exchange of data via said secure messaging communication canal SM2 may then be performed by means of:
- a pseudonym signature message procedure referred as PSM. In this case, the data are provided by the service provider server SP_SERV and are signed by the token D; or
- an ERA procedure together with a public signature certificate procedure referred as PSC. In this case, the data are provided by the token D and are signed by the token D.

These procedures being well known by the man skilled in the art, they are not described here.

It is to be reminded that the token D communicates with a service provider server SP_SERV by means of a local terminal T comprising a contact or contactless interface. Said local terminal T acts as a gateway between said token D and said service provider server SP_SERV.

In order to set-up a secure messaging canal SM1 between said token D and said local terminal T, in a non-limitative embodiment, a Password-Authenticated Connection Establishment procedure referred as PACE is performed as illustrated in Fig. 7.

The TA2 procedure and authentication (deniable AUTH_D or with a transferable proof AUTH_P) above-described will be executed via said secure messaging canal SM1.

Hence, together with the PACE procedure and the TA2 procedure, the authentication above described (deniable AUTH_D or with a transferable proof AUTH_P) based on the pseudonym Ps replace the General Authentication Procedure referred as GAP.

It is to be understood that the present invention is not limited to the aforementioned embodiments.

Hence, some embodiments of the invention may comprise one or a plurality of the following advantages:
- it is easy to implement;
- it permits to have an authentication which replaces the whole CA2-RI procedures and which is more secure than these procedures altogether;
- it permits to have an authentication which replaces the CA3 procedure, which is more secure than this procedure and which is less complex than this CA3 procedure;
- together with the TA2 procedure, it permits to have a mutual authentication between a token and a service provider server;
- it maintains the privacy of the end-user of a token;
- the users' activities with different parties, such as different service provider servers, may not be linked together anymore (non-linkability) and their usage may not be traced anymore (non-traceability): their anonymity is maintained;
- it doesn't require to manage a black or white list;
- it avoids having a central entity as a revocation management terminal with the capability of tracking consumers based on pseudonyms;
- it permits a service provider server to perform pseudonym authentication ;
- it provides a less cumbersome way for a service provider server to perform a pseudonym authentication;
- it permits to perform either a deniable authentication (contrary to the CA3 procedure) or an authentication with a transferable proof (contrary to the CA2-RI procedures).

## Claims

1. Security management system (SYS) for authenticating a token (D) by a service provider server (SP_SERV), wherein said system (SYS) comprises:
- said token (D) comprising a secret key (SKid) and which is adapted to:
- compute a derived secret key (SKps), said computation being a derivation of said secret key (SKid) based on a public key (PKsector) provided by said service provider server (SP_SERV);
- generate at least one pseudonym (Ps) based on said derived secret key (SKps);
- said service provider server (SP_SERV) comprising a public key (PKsector) which is adapted to authenticate said token (D) based on said pseudonym (Ps).

2. Security management system (SYS) according to claim 1, wherein said service provider server (SP_SERV) is further adapted to transmit to said token (D) a certificate (Cce) comprising said public key (PKsector).

3. Security management system (SYS) according to claim 1 or to claim 2, wherein said service provider server (SP_SERV) is further adapted to transmit to said token (D) an information (Tg) indicating if the authentication to be performed by the service provider server (SP_SERV) comprises a transferable proof (S) or not.

4. Security management system (SYS) according to any one of the previous claims 1 to 3, wherein the authentication of said token by said service provider (SP_SERV) is a deniable authentication, and for said deniable authentication of said token (D),
- said service provider server (SP_SERV) is adapted to:
- generate a challenge (Ch);
- cipher said challenge (Ch) with said at least one pseudonym (Ps) and transmit it to said to said token (D);
- check said challenge (Ch) against the challenge (Ch') received from said token (D);
- said token (D) is adapted to:
- receive said ciphered challenge (Ch);
- decipher said ciphered challenge (Ch) using said derived secret key (SKps);
- transmit back the deciphered challenge (Ch') to said service provider server (SP_SERV).

5. Security management system (SYS) according to any one of the previous claims 1 to 3, wherein the authentication of said token by said service provider (SP_SERV) is an authentication with a transferable proof (S), and for said authentication of said token (D),
- said service provider server (SP_SERV) is adapted to:
- generate a challenge (Ch) and to transmit it to said token (D);
- verify a signature (S) received from said token (D), said verification using said pseudonym (Ps) and said challenge (Ch);
- said token (D) is adapted to:
- receive said challenge (Ch);
- compute said signature (S) of said challenge (Ch) using said derived secret key (SKps) and transmit it to said service provider server (SP_SERV).

6. Security management system (SYS) according to the previous claim 5, wherein said signature (S) is further computed based on at least one attribute (Att) stored in said token (D).

7. Security management system (SYS) according to the one of the previous claims 4 to 6, wherein said token (D) is adapted to compute said signature (S) of said challenge (Ch) based on said derived secret key (SKps) and on further data (Dat).

8. A service provider server (SP_SERV) comprising a public key (PKsector), wherein said service provider server (SP_SERV) is adapted to authenticate a token (D) comprising a secret key (SKid), said authentication being based on a pseudonym (Ps) generated by said token (D) based on a derived secret key (SKps), said derived secret key (SKps) being a derivation of said secret key (SKid) based on said public key (PKsector).

9. A token (D) comprising a secret key (SKid), wherein said token (D) is adapted to:
- compute a derived secret key (SKps), said computation being a derivation of said secret key (SKid) based on a public key (PKsector) provided by said service provider server (SP_SERV);
- generate at least one pseudonym (Ps) based on said derived secret key (SKps);
- be authenticated by said service provider server (SP_SERV) comprising said public key (PKsector), said authentication being based on said at least one pseudonym (Ps).

10. A token according to claim 9, wherein said token is a secure element.

11. Authentication method (MTH) for authenticating a token (D) by a service provider server (SP_SERV), wherein said token (D) comprises a secret key (SKid) and said service provider server (SP_SERV) comprises a public key (PKsector), and wherein said authentication method (MTH) comprises:
- computing by means of said token (D) a derived secret key (SKps), said computation being a derivation of said secret key (SKid) based on a public key (PKsector) provided by said service provider server (SP_SERV);
- generating by means of said token (D) at least one pseudonym (Ps) based on said derived secret key (SKps);
- authenticating by means of said service provider server (SP_SERV) said token (D) based on said pseudonym (Ps).

12. Authentication method (MTH) according to claim 10, wherein said authentication method (MTH) further comprises transmitting by means of said service provider server (SP_SERV) to said token (D) of a certificate (Cce) comprising said public key (PKsector).

13. Authentication method (MTH) according to claim 11 or to claim 12, wherein said authentication method (MTH) further comprises transmitting by means of said service provider server (SP_SERV) to said token (D) an information (Tg) indicating if the authentication to be performed by the a service provider server (SP_SERV) comprises a transferable proof (S) or not.

14. Authentication method (MTH) according to any one of the previous claims 11 to 13, wherein said authentication method (MTH) is a deniable authentication, and it further comprises:
- generating a challenge (Ch) by means of said a service provider server (SP_SERV);
- ciphering by means of said a service provider server (SP_SERV) said challenge (Ch) with said at least one pseudonym (Ps) and transmitting it to said to said token (D) by means of said a service provider server (SP_SERV);
- receiving said ciphered challenge (Ch) by means of said token (D);
- deciphering by means of said token (D) said ciphered challenge (Ch) using said derived secret key (SKps);
- transmitting back the deciphered said challenge (Ch') to said service provider server (SP_SERV) by means of said token (D);
- checking by means of said a service provider server (SP_SERV) said challenge (Ch) against the challenge (Ch') received from said token (D).

15. Authentication method (MTH) according to any one of the previous claims 11 to 13, said authentication method (MTH) is with a transferable proof (S), and it further comprises:
- generating by means of said a service provider server (SP_SERV) a challenge (Ch) and to transmit it to said token (D) by means of said a service provider server (SP_SERV);
- receiving said challenge (Ch) by means of said token (D);
- computing by means of said token (D) said signature (S) of said challenge (Ch) based on said derived secret key (SKps) and transmit it to said service provider server (SP_SERV) by means of said token (D);
- verifying by means of said a service provider server (SP_SERV) said signature (S) received from said token (D), said verification using said pseudonym (Ps) and said challenge (Ch).
